# EUROPÄISCHE PATENTSCHRIFT

(11) **EP 0 784 747 B1**
(45) Veröffentlichungstag und Bekanntmachung des Hinweises auf die Patenterteilung: **27.10.1999**
(21) Anmeldenummer: 96924750.1
(22) Anmeldetag: 18.07.1996
(51) Int. Cl.: F02D 41/26

(54) **VERFAHREN UND VORRICHTUNG ZUR STEUERUNG EINES STELLGLIEDES**
PROCESS AND DEVICE FOR CONTROLLING A REGULATING MEMBER
PROCEDE ET DISPOSITIF DE COMMANDE D'UN ORGANE DE REGLAGE

(30) Priorität: 27.07.1995 DE 19527541
(43) Veröffentlichungstag der Anmeldung: 23.07.1997
(73) Patentinhaber: SIEMENS AKTIENGESELLSCHAFT, 80333 München (DE)
(72) Erfinder: MERL, Richard, D-92421 Schwandorf (DE); RAAB, Günther, D-93047 Regensburg (DE)
(86) Internationale Anmeldenummer: DE9601314
(87) Internationale Veröffentlichungsnummer: WO9705373

(56) Entgegenhaltungen:
- EP-A- 0 017 219
- EP-A- 0 240 134
- EP-A- 0 608 456
- WO-A-88/10060
- GB-A- 2 184 570
- US-A- 4 310 888

## Beschreibung

Die Erfindung betrifft ein Verfahren zur Steuerung eines Stellgliedes gemäß dem Oberbegriff des Anspruchs 1 und eine Vorrichtung zur Steuerung des Stellgliedes gemäß dem Oberbegriff des Anspruchs 7. Die Vorrichtung und das Verfahren werden z.B. in einem Kraftfahrzeug zur Steuerung eines Motors verwendet.

Aus der EP 0 608 456 Al ist bereits ein Verfahren und eine Vorrichtung zur Steuerung eines Stellgliedes bekannt, das eine Recheneinheit mit einem Betriebssystem aufweist, welches Zeitverwalten bereithält, die synchrone Arbeitsabläufe und asynchrone Arbeitsabläufe in eine Synchronliste bzw. eine Asynchronliste eintragen, wobei die Synchronliste bei der Abarbeitung Vorrang vor der Asynchronliste hat. Als synchrone Arbeitsabläufe werden dabei Arbeitsabläufe verstanden, die in Abhängigkeit von einem Kurbelwinkel ausgelöst werden. Unter asynchronen Arbeitsabläufen werden Arbeitsabläufe verstanden, die nicht direkt abhängig von einem Kurbelwinkel sind. Die Eintragung der synchronen Arbeitsabläufe erfolgt immer in die Synchronliste und die Eintragung der asynchronen Arbeitsabläufe erfolgt immer in die Asynchronliste, so daß die synchronen Arbeitsabläufe unabhängig von Betriebszuständen des Motors immer eine höhere Priorität bei der Abarbeitung aufweisen als die asynchronen Arbeitsabläufe.

Aus der WO-A-88 100 60 und der EP-A-240 134 ist darüber hinaus bekannt, Arbeitsabläufen bei Transport- und Roboterprozessen in Abhängigkeit von bestimmten Zuständen unterschiedliche Prioritäten zuzuordnen.

Der Erfindung liegt daher die Aufgabe zugrunde, eine Vorrichtung und ein Verfahren zur Steuerung eines Stellgliedes anzugeben, das die Zeit für die Abarbeitung von verschiedenen Arbeitsabläufen wie z.B. synchronen und asynchronen Arbeitsabläufen verkürzt. Zudem soll eine flexiblere und effizientere Ausnutzung der zur Verfügung stehenden Verarbeitungskapazität einer Recheneinheit erreicht werden.

Die Aufgabe wird durch die Merkmale des Anspruchs 1 und des Anspruchs 7 gelöst.

Das erfindungsgemäße Verfahren mit den Merkmalen des Anspruchs 1 und die erfindungsgemäße Vorrichtung mit den Merkmalen des Anspruchs 7 haben den Vorteil, daß in Abhängigkeit von Eingangssignalen, die z.B. Betriebszustände eines Motors oder andere Zustände darstellen, die Arbeitsabläufe unterschiedlichen Prioritäten zugeordnet werden. Auf diese Weise wird für jeden Betriebszustand eine geeignete Vergabe der Prioritäten erreicht und damit eine effiziente Abarbeitung der Arbeitsabläufe ermöglicht.

Durch die in den Unteransprüchen aufgeführten Maßnahmen sind vorteilhafte Weiterbildungen und Verbesserungen des im Anspruch 1 angegebenen Verfahrens und der im Anspruch 7 angegebenen Vorrichtung möglich.

Gemäß einer Weiterbildung der Erfindung werden die Arbeitsabläufe in verschiedene Listen eingetragen, die in Bezug auf eine Abarbeitung unterschiedliche Prioritäten aufweisen. Somit wird eine einfache Verwaltung der Arbeitsabläufe ermöglicht.

Eine weitere vorteilhafte Ausbildung der Erfindung besteht darin, daß vorrangig die Zuordnung eines synchronen Arbeitsablaufes zu einer Priorität durchgeführt wird.

Weiterhin ist es vorteilhaft, daß zylinderabhängige Arbeitsabläufe nach der Zuordnung der synchronen Arbeitsabläufe einer Priorität zugeordnet werden. Zudem ist es von Vorteil, daß asynchrone Arbeitsabläufe erst nach den zylinderabhängigen Arbeitsabläufen einer Priorität zugeordnet werden.

Die Rangfolge der Zuordnung der Arbeitsabläufe zu Prioritäten führt zu einer Abarbeitung der Zuordnung, die auf momentane Größen wie z.B. Betriebszustände des Motors abgestimmt sind.

Dadurch, daß alle Arbeitsabläufe, die in einer prioritätshöheren Liste eingetragen sind, vor der Bearbeitung der Arbeitsabläufe einer prioritätsniedrigeren Liste abgearbeitet werden, wird sichergestellt, daß die momentan prioritätshöheren und damit wichtigeren Arbeitsabläufe rechtzeitig abgearbeitet werden.

Eine vorteilhafte Ausbildung besteht in einem Ringspeicher, der als First-In-First-Out (FIFO)-Speicher ausgebildet ist und in dem eine Liste abgespeichert ist.

Die Erfindung wird anhand der Figuren näher erläutert; es zeigen:
Figur 1 eine Vorrichtung zur Erzeugung von Steuersignalen,
Figur 2 einen schematischen Programmablauf,
Figur 3 eine Liste,
Figur 4 einen Ringspeicher,
Figur 5 einen zweiten Programmablauf und
Figur 6 eine Zuordnung.

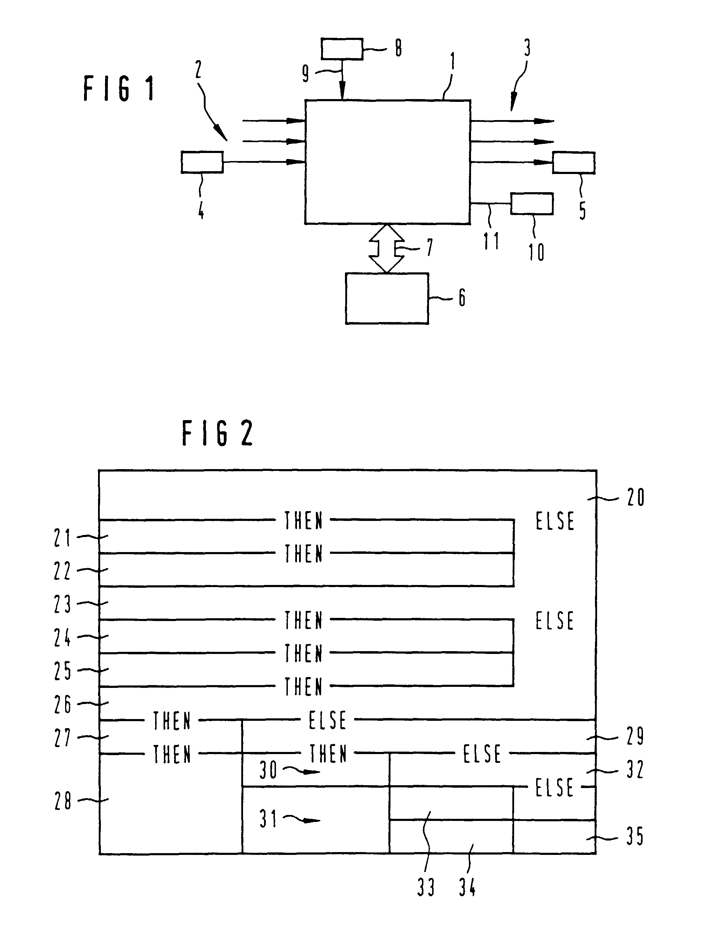

Figur 1 zeigt eine Recheneinheit 1, an die Eingangsleitungen 2 geführt sind. Ein Sensor 4 ist über eine Eingangsleitung 2 mit der Recheneinheit 1 verbunden. Die Recheneinheit 1 weist Ausgangsleitungen 3 auf. Über eine Ausgangsleitung 3 ist ein Stellglied 5 mit der Recheneinheit 1 verbunden. Weiterhin ist die Recheneinheit 1 über eine Datenleitung 7 mit einem Speicher 6 verbunden. Ein Timer 8 ist über eine Steuerleitung 9 mit der Recheneinheit 1 verbunden. In Figur 1 ist explizit nur ein Sensor 4 und ein Stellglied 5 dargestellt, wobei jedoch mehrere Sensoren und/oder Stellglieder und/oder Schalter, die nicht explizit dargestellt sind, über die Eingangsleitungen 2 und über die Ausgangsleitungen 3 mit der Recheneinheit 1 verbunden sind.

Die Recheneinheit 1 erfaßt Meßsignale des Sensors 4, verarbeitet bzw. wertet die Meßsignale des Sensors 4 aus und ermittelt aus den Meßsignalen des Sensors 4 Steuersignale, die an das Stellglied 5 weitergegeben werden. Der Sensor 4 stellt z.B. einen Drehzahl- und Bezugsmarkensensor dar, der anhand eines Geberzahnrades ermittelt, ob sich der Motor dreht bzw. welchen Kurbelwinkel eine Kurbelwelle einnimmt. Diese Information wird von der Recheneinheit 1 erfaßt, weiterverarbeitet und daraus ein Steuersignal für das Stellglied 5 ermittelt, das z.B. ein Einspritzventil ansteuert.
Der Sensor 5 kann jedoch auch andere Zustände des Fahrzeugs erfassen.

Zur Erfassung und Auswertung der Meßsignale und zur Ermittlung der Steuersignale werden Arbeitsabläufe verwendet, die von einem Betriebssystem verwaltet werden. Die Arbeitsabläufe und das Betriebssystem sind im Speicher 6 abgelegt.

Figur 2 zeigt schematisch den Ablauf von Arbeitsabläufen, d.h. den Aufbau des Betriebssystems. Bei Programmpunkt 20 überprüft die Recheneinheit 1, ob von dem Drehzahl- und Bezugsmarkensensor 4 ein Segmentanstoß, d.h. eine vorgegebenen Winkelstellung der Kurbelwelle wie z.B. 120° ermittelt wird. Ist dies der Fall, so wird nach Programmpunkt 21 verzweigt. Bei Programmpunkt 21 wird ein Verwaltungsprogramm aufgerufen, das in Abhängigkeit von einem vorgegebenen Kurbelwinkel von 120° synchrone Arbeitsabläufe in eine von drei Listen 40,41,42 einträgt. In diesem Ausführungsbeispiel sind drei Listen 40,41,42 verwendet. Dies bedeutet jedoch keine Einschränkung auf die Anzahl der Listen. Es können je nach Anwendung auch zwei oder mehr als drei Listen verwendet werden. Die synchronen Arbeitsabläufe führen in Abhängigkeit von einem Kurbelwinkel der Kurbelwelle eine spezielle Funktion aus, wie z.B. die Steuerung der Einspritzung oder die Steuerung der Zündung. Die synchronen Arbeitsabläufe müssen synchron mit einem vorgegebenen Kurbelwinkel ausgeführt werden.

Die drei Listen weisen unterschiedlichen Prioritäten in bezug auf die Abarbeitung auf. Die erste Liste 40 weist die höchste Priorität, die zweite Liste 41 eine mittlere Priorität und die dritte Liste 42 die niedrigste Priorität auf. Die Listen sind im Speicher 6 abgelegt. Welche Arbeitsabläufe zu welchen Kurbelwinkeln und in Abhängigkeit von welchen Betriebszuständen in welche Liste eingetragen werden, ist in einer Tabelle im Speicher 6 abgelegt.

Sind die synchronen Arbeitsabläufe für den Kurbelwinkel von 120° eingetragen, so werden anschließend bei Programmpunkt 22 zylinderindividuelle Arbeitsabläufe in Abhängigkeit von Betriebsgrößen des Kraftfahrzeuges bzw. des Motors in eine Liste 40, 41, 42 entsprechender Priorität eingetragen. Die Bedingungen, bei denen welche zylinderindividuellen Arbeitsablaufes in welche Liste 40,41,42 eingetragen werden, ist ebenfalls wie bei den synchronen Arbeitsabläufen in einer Tabelle im Speicher 6 abgelegt.

Sind alle zylinderindividuellen Arbeitsabläufe, die für den Kurbelwinkel von 120° in Abhängigkeit von der Tabelle, die im Speicher 6 abgelegt ist, in eine Liste 40,41,42 eingetragen, dann wird nach Programmpunkt 23 verzweigt.

Ist jedoch bei Programmpunkt 20 kein Segmentanstoß vorhanden, so wird direkt nach Programmpunkt 23 verzweigt.

Bei Programmpunkt 23 überprüft die Recheneinheit 1, ob von dem Timer 8 ein Zeitimpuls abgegeben wird. Diese Zeitimpulse werden alle 10 ms vom Timer 8 abgegeben. Die Zeitimpulse können auch je nach Notwendigkeit in anderen zeitlichen Abständen abgegeben werden. Ergibt die Abfrage bei Programmpunkt 23, daß ein Zeitimpuls abgegeben wurde, so wird nach Programmpunkt 24 verzweigt.

Bei Programmpunkt 24 wird von der Recheneinheit 1 vorzugsweise überprüft, ob auf einer vorgegebenen Eingangsleitung 2 ein Diagnosesignal anliegt, das von einem externen Diagnosegerätes, das an die vorgegebene Eingangsleitung 2 angeschlossen ist, abgegeben wird. Ist dies der Fall, so wird eine Diagnose der Recheneinheit 1 bzw. der Sensoren 4 oder der Stellglieder 5 durchgeführt. Die Diagnose umfaßt eine Überprüfung der fehlerfreien Funktion der Recheneinheit 1, des Sensors 4 bzw. des Stellgliedes 5.

Weiterhin werden mittels der Diagnose im Speicher 6, in dem ein Fehlerfeld abgelegt ist, Fehler, die während des Betriebes des Motors auftreten, abgefragt. Liegt kein Dignosesignal an, so wird sofort nach Programmpunkt 25 verzweigt. Programmpunkt 24 ist eine vorteilhafte Zusatzfunktion, die nicht immer durchgeführt wird, wobei in diesen Fällen direkt von Programmpunkt 23 auf Programmpunkt 25 verzweigt wird.

Bei Programmpunkt 25 wird ein Verwaltungsprogramm aufgerufen, das zeitlich kurze Arbeitsabläufe selbst durchführt und asynchrone Arbeitsabläufe in eine der Listen 40, 41, 42 einträgt. Die Informationen, welcher asynchrone Arbeitsablauf in welche Liste 40, 41, 42 eingetragen wird, ist in einer Tabelle im Speicher 6 abgelegt. Die Eintragung der asynchronen Arbeitsabläufe erfolgt in Abhängigkeit von Zuständen des Fahrzeugs, insbesondere von Betriebszuständen des Motors. Sind die asynchronen Arbeitsabläufe entsprechend der Tabelle des Speichers 6 in die Listen 40, 41, 42 eingetragen, so wird nach Programmpunkt 26 verzweigt.

Liegt bei Programmpunkt 23 ein Zeitimpuls vom Timer 8 vor, so wird direkt nach Programmpunkt 26 verzweigt.

Die Arbeitsabläufe werden abhängig von Bedingungen, die sich während der Durchführung der Arbeitsabläufe ergeben, in eine für die Bedingungen entsprechende Liste mit optimaler Priorität eingeschrieben.

Bei Programmpunkt 26 wird in der ersten Liste 40, die die höchste Priorität bei der Abarbeitung hat, nachgesehen, ob ein Arbeitsablauf eingetragen ist. Ist dies der Fall, so wird nach Programmpunkt 27 verzweigt. Bei Programmpunkt 27 wird der Arbeitsablauf, auf den ein Anfangszeiger gerichtet ist, abgearbeitet und anschließend bei Programmpunkt 28 der Anfangszeiger zu dem Listenplatz, der als nächstes abgearbeitet werden soll, verschoben. Der Anfangszeiger zeigt immer auf den Arbeitsablauf, der zeitlich am längsten in der Liste eingetragen ist. Die Listen 40,41,42 sind als First-In-First-Out Speicher ausgebildet. Anschließend wird nach Programmpunkt 20 zurückverzweigt und das Programm erneut durchlaufen.

Ergibt die Abfrage bei Programmpunkt 26, daß kein Arbeitsablauf in der ersten Liste 40 eingetragen ist, so wird nach Programmpunkt 29 verzweigt. Bei Programmpunkt 29 wird überprüft, ob in der zweiten Liste 41, der eine niedrigere Priorität als der ersten Liste 40 zugeordnet ist, ein Arbeitsablauf eingetragen ist. Ist dies der Fall, so wird bei Programmpunkt 30 der Arbeitsablauf, auf den der Anfangszeiger gerichtet ist, abgearbeitet. Anschließend wird bei Programmpunkt 31 der Anfangszeiger auf den Listenplatz verschoben, der als nächstes abgearbeitet werden soll. Daraufhin wird nach Programmpunkt 20 zurückverzweigt und das Programm durchlaufen.

Ergibt die Abfrage bei Programmpunkt 29, daß in der zweiten Liste 41 kein Arbeitsablauf eingetragen ist, so wird nach Programmpunkt 32 verzweigt. Bei Programmpunkt 32 erfolgt die Abfrage, ob in der dritten Liste 42, die eine niedrigere Priorität als die zweite Liste 41 aufweist, ein Arbeitsablauf eingetragen ist. Ist dies der Fall, so wird bei Programmpunkt 33 der Arbeitsablauf durchgeführt, auf den der Anfangszeiger gerichtet ist. Anschließend wird bei Programmpunkt 34 der Anfangszeiger auf den nächsten Listenplatz verschoben. Abschließend wird nach Programmpunkt 20 zurückverzweigt und das Programm erneut durchlaufen.

Ergibt die Abfrage bei Programmpunkt 32, daß in der dritten Liste 42 kein Arbeitsablauf eingetragen ist, so wird bei Programmpunkt 35 ein Hintergrundprogramm ohne eine vorgegebene Zeitanforderung z.B. eine Fehlerdiagnose mit Hilfe von Prüfsummen durchgeführt. Nach Durchführung der Fehlerdiagnose wird nach Programmpunkt 20 zurückverzweigt und das Programm erneut durchlaufen. Die Durchführung des Programmpunktes 35 stellt eine vorteilhafte Weiterbildung dar, die wahlweise durchführbar ist.

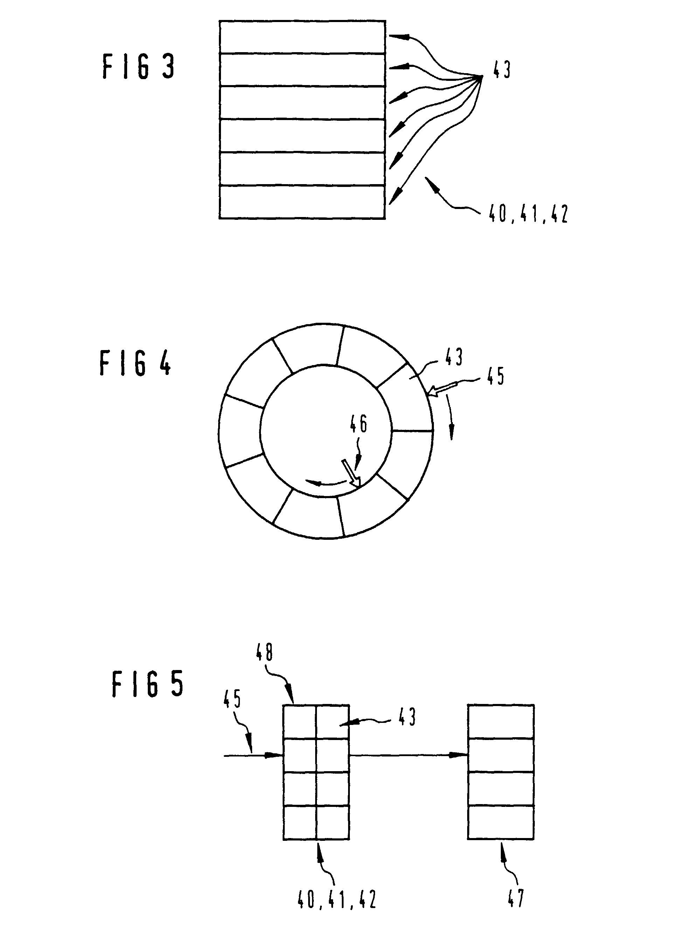

Figur 3 stellt anhand einer Liste 40, 41, 42 die erste, die zweite und die dritte Liste 40,41,42 dar. Die Listen 40, 41, 42 sind im Speicher 6 abgelegt. Eine Liste 40, 41, 42 weist mehrere Listenplätze 43 auf. In einen Listenplatz 43 wird jeweils ein Arbeitsablauf eingetragen, der abzuarbeiten ist. Die erste, die zweite und die dritte Liste 40, 41, 42 sind im Aufbau gleich, unterscheiden sich jedoch in der Priorität, mit der die Listen nach dem Programm der Figur 2 abgearbeitet werden.

Eine besonders vorteilhafte Ausbildung der ersten Liste 40, der zweiten Liste 41 und der dritten Liste 42 zeigt Figur 4 in Form eines Ringspeichers 44. Der Ringspeicher 44 ist als First-In-First-Out-Speicher ausgebildet, d.h. der Arbeitsablauf, der zuerst eingetragen wird, wird auch zuerst abgearbeitet. Der Anfangszeiger 45 zeigt auf den Arbeitsablauf oder den Listenplatz 43, der im Ringspeicher 44 zeitlich am längsten mit einem Arbeitsablauf belegt ist, d.h. auf den Arbeitsablauf, der zeitlich am längsten im Ringspeicher 44 abgelegt ist. Bei der Abarbeitung der Arbeitsabläufe einer Liste 40, 41, 42 wird der Arbeitsablauf abgearbeitet, auf den der Anfangszeiger 45 zeigt. Nach Abarbeitung des Arbeitsablaufes wird der Anfangszeiger 45 auf den nächsten Listenplatz 43 verschoben, der den Arbeitsablauf aufweist, der in der Liste als nächstes abzuarbeiten ist.

Die Eintragung der synchronen, der zylinderindividuellen und der asynchronen Arbeitsabläufe erfolgt in eine der Listen 40, 41, 42 jeweils in den Listenplatz 43, auf den ein Endezeiger 46 zeigt. Nach Eintragung des Arbeitsablaufes wird der Endezeiger 46 auf das nächste freie Listenfeld verschoben. Die Richtung, mit der der Anfangszeiger 45 nach Abarbeitung eines Programmablaufes verschoben wird, ist in Figur 4 in Form eines Pfeiles dargestellt. Der Endezeiger 46 wird nach Eintragung eines Arbeitsablaufes im Uhrzeigersinn um einen Listenplatz weiter verschoben, so daß der Endezeiger 46 wieder auf einen neuen Listenplatz 43 zeigt.

Stehen der Endezeiger 46 und der Anfangszeiger 45 auf dem gleichen Listenfeld, so ist kein Arbeitsablauf in die Liste 40, 41, 42 eingetragen. Steht der Anfangszeiger 45 im Uhrzeigersinn gesehen um einen Listenplatz weiter als der Endezeiger 46, so ist die Liste 40, 41, 42 vollständig gefüllt.

Bei der Eintragung eines Arbeitsablaufes wird in einer vorteilhaften Weiterbildung zusätzlich überprüft, ob durch den Eintrag der Ringspeicher 44 überläuft, d.h. ob der Anfangszeiger 45 nach dem Eintrag auf dem gleichen Listenplatz 43 steht, wie der Endezeiger 46. Ist dies der Fall, so wird ein Fehlerbit gesetzt. Auf diese Weise ist es möglich, eine Überlastung des Ringspeichers 44 festzustellen. Durch die Ausbildung der Listen 40, 41, 42 in Form eines Ringspeichers wird auch bei Überlauf des Ringspeichers 44 dafür gesorgt, daß weiterhin alle im Ringspeicher 44 abgelegten Arbeitsabläufe abgearbeitet werden und nur eine geringe Anzahl von Arbeitsabläufen beim Überlauf verlorengeht. So ist gewährleistet, daß auch bei einer Überlastung eine Abarbeitung der meisten Arbeitsabläufe möglich ist.

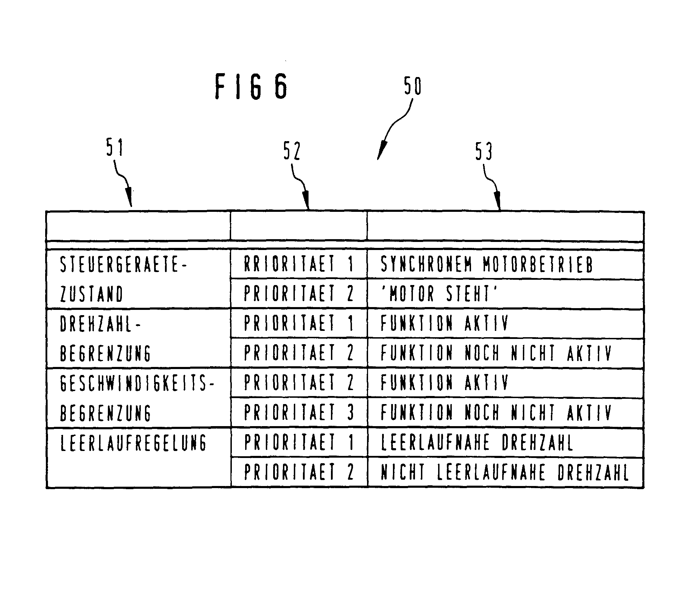

Figur 5 zeigt eine vorteilhafte Weiterbildung der Erfindung, die darin besteht, in einer Liste 40, 41, 42 ein Listenfeld 49 einer Programmliste 47 abzulegen. Die Programmliste 47 weist mehrere Listenfelder 49 auf, an denen jeweils eine Speicheradresse abgelegt ist. Die Speicheradresse zeigt auf einen Arbeitsablauf, der im Speicher 6 abgelegt ist. Dies bietet den Vorteil, daß für eine Eintragung eines Arbeitsablaufes nicht der gesamte Arbeitsablauf in eine Liste 40, 41, 42 eingetragen werden muß, sondern nur dessen Listenfeld 48 in die Liste 40, 41, 42 eingetragen wird.

Eine besonders vorteilhafte Weiterbildung der Erfindung beruht darin, für jeden Arbeitsablauf in einer ersten, in einer zweiten oder in einer dritten Liste 40, 41, 42 ein Zeitfeld 49 abzulegen. Das Zeitfeld 49 beeinhaltet eine variable oder eine festgelegte Zeitgröße, anhand der der Start des Arbeitsablaufes festgelegt wird. Als Zeitgröße wird z.B. eine ganzzahlige Zahl verwendet, die jedesmal, wenn überprüft wird, ob der Arbeitsablauf gestartet werden soll, um eine ganze Zahl, z.B. um Eins erniedrigt wird. Erreicht die Zeitgröße den Wert 0, so wird der Arbeitsablauf gestartet. Die Überprüfung, ob der Arbeitsablauf gestartet werden soll, erfolgt nach einem vorgegebenen Zeitraster. In dem beschriebenen Ausführungsbeispiel wird alle 10ms nachgesehen, ob der Arbeitsablauf gestartet werden soll und die Zeitgröße, die z.B. den Wert 3 aufweist, um den Wert 1 erniedrigt, bis die Zeitgröße den Wert 0 erreicht und der Arbeitsablauf gestartet wird.

In vorteilhafter Weise werden drei Zeitraster, 10ms, 100ms und 1s vorgegeben. Jedem Zeitraster ist mindestens eine erste und/oder eine zweite und/oder eine dritte Liste 40, 41, 42 zugeordnet. Im Zeitraster von 10ms werden alle 10ms die Arbeitsabläufe auf einen Start hin überprüft und die Zeitgröße um eine ganzzahligen Wert erniedrigt. Bei dem Zeitraster mit 100ms werden die Arbeitsabläufe alle 100ms auf einen Start hin überprüft und die Zeitgröße um einen ganzzahligen Wert erniedrigt. Bei dem Zeitraster 1s werden die Arbeitsabläufe jede Sekunde auf einen Start hin überprüft und die Zeitgröße jede Sekunde um einen Wert erniedrigt. Auf diese Weise ist es möglich, die Arbeitsabläufe, die oft zu überprüfen sind alle 10ms zu überprüfen, die Arbeitsabläufe, die nicht so oft zu überprüfen sind, alle 100 ms zu überprüfen und die Arbeitsabläufe, die selten zu überprüfen sind, jede Sekunde zu überprüfen.

Es können auch Zeitraster mit anderen Zeiten und/oder mehrere oder weniger Zeitraster Verwendung finden und die Zeitgröße auch bei jeder Überprüfung des Arbeitsablaufes um den Wert 1 erhöht werden, bis ein vorgegebener Wert erreicht wird und daraufhin der Arbeitsablauf gestartet wird.

Dadurch daß die Zeitgröße frei wählbar ist, kann die Zeitgröße während des Programmablaufs an Betriebsbedingungen bzw. sonstigen Zuständen des Fahrzeuges oder des Motors angepaßt werden. Auf diese Weise wird eine flexible Abarbeitung der Arbeitsabläufe erreicht.

Ein besonderer Vorteil der Zeitgröße beruht darin, daß für jeden Arbeitsablauf eine eigene Zeitgröße zur Verfügung steht, die unabhängig von der absoluten Zeit des Betriebssystems ist. Dadurch wird gewährleistet, daß jeder Arbeitsablauf, der in einer Liste eingetragen ist, abgearbeitet wird, selbst wenn z.B. wegen Überlast des Systems einmal eine Überprüfung des Arbeitsablaufes zu einem vorgegebenen Zeitraster entfällt und der Arbeitsablauf erst beim nächsten Zeitraster überprüft wird. Der Arbeitsablauf wird somit auf alle Fälle ausgeführt, auch wenn dies um ein Zeitraster zu spät erfolgt.

Figur 6 zeigt eine Tabelle 50, die Arbeitsabläufe in Abhängigkeit von Betriebszuständen des Motors, des Fahrzeuges oder weiterer Zustände Listen 40,41,42 verschiedener Priorität zuordnet.

In Spalte 51 sind die Arbeitsabläufe angegeben. In Spalte 52 sind die Prioritäten aufgeführt, denen die Arbeitsabläufe zugeordnet werden. Dabei entspricht die höchste Priorität 1 der ersten Liste 40, die zweithöchste Priorität 2 der zweiten Liste 41 und die niedrigste Priorität 3 der dritten Liste 42.

In der Spalte 53 sind Beispiele für die Bedingungen angegeben, bei denen die Arbeitsabläufe unterschiedlicher Priorität zugeordnet sind und damit in verschiedenen Listen 40,41,42 eingetragen werden.

Ein Arbeitsablauf, der mit Steuergerätezustand bezeichnet ist, ist bei stehendem Motor der Priorität 2 oder bei synchronem Motorbetrieb der Priorität 1 zugeordnet.

Ein Arbeitsablauf, der mit Drehzahlbegrenzung bezeichnet ist und dessen Aufgabe die Begrenzung der Drehzahl des Motors ist, wird während der Durchführung der Drehzahlbegrenzung der Priorität 1 und bei nicht aktiver Drehzahlbegrenzung, d.h. wenn die Drehzahl einen vorgegebenen Wert unter einer vorgegebenen Grenzdrehzahl liegt, der Priorität 2 zugewiesen.

Der Arbeitsablauf Leerlaufregelung, der die Leerlaufdrehzahl regelt, wird in Abhängigkeit von der Drehzahl verschiedenen Prioritäten zugeordnet und deshalb in verschiedene Listen 40,41,42 eingetragen. Bei einer Drehzahl, die im Bereich von 100 Umdrehungen pro Minute (U/m) im Bereich der vorgegebenen Drehzahl von 800 U/m liegt, wird der Leerlaufregelung die höchste Priorität 1 zugeordnet. Liegt die Drehzahl außerhalb, so wird die Leerlaufregelung der zweithöchsten Priorität 2 zugeordnet.

Der Arbeitsablauf Geschwindigkeitsbegrenzung, der die Geschwindigkeit des Fahrzeuges regelt, wird der zweithöchsten Priorität 2 zugeordnet, wenn die Geschwindigkeitsbegrenzung aktiv ist, und der niedrigsten Priorität 3 zugeordnet, wenn die Geschwindigkeitsbegrenzung nicht aktiv ist, d.h. die Geschwindigkeit des Fahrzeuges einen vorgegebenen Wert unter einer vorgegebenen Grenzgeschwindigkeit liegt.

Unter dem Begriff Liste 40,41,42 sind Ablaufspeicher 40,41,42 zu verstehen. Ebenso sind unter den Begriffen Asynchronliste, Synchronliste und Tabelle Speicherbereiche zu verstehen.

## Patentansprüche

1. Verfahren zur Steuerung eines Stellgliedes, insbesondere für ein Kraftfahrzeug, wobei ein Eingangssignal erfaßt und daraus ein Steuersignal für das Stellglied erzeugt wird, wobei ein Arbeitsablauf in eine vorgegebene Priorität eingeordnet wird und der Arbeitsablauf entsprechend der Priorität abgearbeitet wird und wobei der Arbeitsablauf in Abhängigkeit von mindestens einem Zustand, insbesondere einem Betriebszustand eines Kraftfahrzeuges, unterschiedlichen Prioritäten zugeordnet wird,
**dadurch gekennzeichnet,**
daß jeder Arbeitsablauf einem von mehreren Ablaufspeichern (40, 41, 42) mit unterschiedlichen Prioritäten zugeordnet wird und dort der Reihe nach in aufeinanderfolgenden Speicherplätzen eingetragen wird,
daß die Arbeitsabläufe entsprechend ihrer Reihenfolge in den Ablaufspeichern beginnend mit dem Ablaufspeicher (40) höchster Priorität ausgeführt werden.

2. Verfahren nach Anspruch 1,
**dadurch gekennzeichnet,**
daß Betriebszustände einer Zylinder aufweisenden Brennkraftmaschine erfaßt werden und
daß zuerst synchrone Arbeitsabläufe einer Priorität zugeordnet werden, daß anschließend zylinderabhängige Arbeitsabläufe einer Priorität zugeordnet werden, und
daß daraufhin asynchrone Arbeitsablaufe einer Priorität zugeordnet werden.

3. Verfahren nach Anspruch 1,
**dadurch gekennzeichnet,**
daß die Arbeitsabläufe in Abhängigkeit von den zuständen einer vorgegebenen Priorität zugeordnet werden, daß die Arbeitsabläufe, die Prioritäten und die Zustände in einer Tabelle (50) abgelegt werden.

4. Verfahren nach Anspruch 1,
**dadurch gekennzeichnet,**
daß zur Einstufung eines Arbeitsablaufes in eine Priorität eine Adresse eines Listenfeldes (49) in den Ablaufspeicher (40, 41, 42) eingetragen wird, daß die Adresse auf ein Listenfeld (49) einer Programmliste (47) zeigt, daß in dem Listenfeld (49) der Programmliste (47) eine Speicheradresse abgelegt ist, an der ein Arbeitsablauf abgelegt ist, und daß die Programmliste (47) in einem Speicher (6) abgelegt ist.

5. Verfahren nach Anspruch 1,
**dadurch gekennzeichnet,**
daß in dem Ablaufspeicher (40, 41, 42) für einen Arbeitsablauf ein Zeitfeld (48) vorgesehen wird,
daß in das Zeitfeld (48) eine Zeitgröße eingetragen wird,
daß die Zeitgröße nach einem vorgegebenen Zeitraster um einen vorgegebenen Wert erniedrigt oder erhöht wird, wenn überprüft wird, ob der Arbeitsablauf gestartet wird, und
daß der Arbeitsablauf gestartet wird, wenn die Zeitgröße (48) einen vorgegebenen Wert erreicht.

6. Verfahren nach Anspruch 5,
**dadurch gekennzeichnet,**
daß als Zeitgröße (48) ein variabler Wert verwendet wird, der in Abhängigkeit von Zuständen, insbesondere von Betriebszuständen eines Kraftfahrzeuges, verändert wird.

7. Vorrichtung zur Steuerung eines Stellgliedes, insbesondere für ein Kraftfahrzeug, mit einer Recheneinheit (1), die Eingangssignale erfaßt und daraus Steuersignale für das Stellglied erzeugt, wobei die Recheneinheit (1) Arbeitsabläufe in vorgegebene Prioritäten einordnet und die Arbeitsabläufe entsprechend der priorität abarbeitet und wobei
die Recheneinheit (1) die Arbeitsabläufe in Abhängigkeit von Zuständen, insbesondere von Betriebszuständen eines Kraftfahrzeuges, unterschiedlichen Prioritäten zuordnet,
**dadurch gekennzeichnet,**
daß die Recheneinheit (1) mit einem Ringspeicher (44) verbunden ist, der als First-In-First-Out-Speicher ausgebildet ist,
daß die Ringspeicher Ablaufspeicher (40, 41, 42) darstellen, daß die Ablaufspeicher (40, 41, 42) Arbeitsabläufe enthalten, daß jedem Ablaufspeicher (40, 41, 42) eine von mehreren Prioritäten zugeordnet ist, nach denen die Ablaufspeicher abgearbeitet werden.

## Claims

1. A method for controlling an actuator, in particular for a motor vehicle, whereby an input signal is detected and a control signal for the actuator being generated from it, an operation is assigned to a prescribed priority level and the operation is processed in accordance with the priority level, and whereby the operation is assigned to different priority levels as a function of at least one state, in particular an operating state of a motor vehicle,
characterized in that
each operation is assigned to one of several memories (40, 41, 42) with different priority levels and is entered there into successive memory locations in sequence, and in that the operations are executed in accordance with their sequence in the program memories starting with the program memory (40) with the highest priority level.

2. Method according to claim 1,
characterized in that
operating states of an internal combustion engine containing cylinders are detected, in that firstly synchronous operations are assigned to a priority level, in that subsequently cylinder-dependent operations are assigned to a priority level, and in that asynchronous operations are then assigned to a priority level.

3. Method according to claim 1,
characterized in that
the operations are assigned to a prescribed priority level as a function of the states, in that the operations, the priority levels and the states are stored in a table (50).

4. Method according to claim 1,
characterized in that
in order to classify an operation into a priority level, an address of a list field (49) is entered into the program memory (40, 41, 42), in that the address points to a list field (49) of a program list (47), in that a memory address, at which an operation is stored, is stored in the list field (49) of the program list (47), and in that the program list (47) is stored in a memory (6).

5. Method according to claim 1,
characterized in that
a time field (48) is provided in the program memory (40, 41, 42) for an operation, in that a time value is entered into the time field (48), in that the time value is decreased or increased by a prescribed value in accordance with a prescribed timing pattern when a check is made to determine whether the operation has started, and in that the operation is started when the time value (48) reaches a prescribed value.

6. Method according to claim 5,
characterized in that
a variable value, which is modified as a function of states, in particular of operating states of a motor vehicle, is used as time value (48).

7. A device for controlling an actuator, in particular for a motor vehicle, having an arithmetic unit (1) which detects input signals and from them generates control signals for the actuator, the arithmetic unit (1) assigning operations to prescribed priority levels and processing the operations in accordance with the priority level, whereby the arithmetic unit (1) assigns the operations to different priority levels as a function of states, in particular of operating states of a motor vehicle.
characterized in that
the arithmetic unit (1) is connected to a ring buffer (44) which is designed as a first-in first-out memory, in that the ring buffers constitute program memories (40, 41, 42), in that the program memories (40, 41, 42) contain operations, in that each program memory (40, 41, 42) is assigned to one of a number of priority levels according to which the program memories are processed.

## Revendications

1. Procédé de commande d'un organe de réglage, notamment pour véhicule automobile, selon lequel un signal d'entrée est détecté et, à partir de celui-ci, un signal de commande est produit pour l'organe de réglage, selon lequel un déroulement d'opération est classé à une priorité préfixée et le déroulement d'opération est mis en oeuvre en fonction de la priorité et selon lequel le déroulement d'opération est associé à des priorités différentes en fonction d'au moins une situation, notamment d'une situation de fonctionnement d'un véhicule automobile,
caractérisé en ce que chaque déroulement d'opération est associé à l'une parmi plusieurs mémoires de déroulement (40, 41, 42) de priorités différentes et y est enregistré, dans l'ordre, dans des emplacements de mémoire se succédant et en ce que les déroulements d'opération sont exécutés, en fonction de leur ordre dans les mémoires de déroulement, en commençant par la mémoire de déroulement de priorité la plus haute.

2. Procédé suivant la revendication 1, caractérisé en ce que des situations de fonctionnement d'un moteur à combustion interne comportant des cylindres sont détectées et en ce que ce sont d'abord des déroulements d'opération synchrones qui sont associés à une priorité, en ce qu'ensuite des déroulements d'opération cylindre par cylindre sont associés à une priorité et en ce qu'enfin, des déroulements d'opération asynchrones sont associés à une priorité.

3. Procédé suivant la revendication 1, caractérisé ce que les déroulements d'opération sont associés à une priorité préfixée en fonction des situations et en ce que les déroulements d'opération, les priorités et les situations sont déposés dans une table (50).

4. Procédé suivant la revendication 1, caractérisé en ce que, pour le classement d'un déroulement d'opération dans une priorité, une adresse d'une zone de liste (49) est enregistrée dans la mémoire de déroulement (40, 41, 42), en ce que l'adresse pointe sur une zone de liste (49) d'une liste de programme (47), en ce qu'une adresse de mémoire, à laquelle un déroulement d'opération est déposé, est déposée dans la zone de liste (49) de la liste de programme (47) et en ce que la liste de programme (47) est déposée dans une mémoire (6).

5. Procédé suivant la revendication 1, caractérisé en ce qu'une zone de temps (48) est prévue dans la mémoire de déroulement (40, 41, 42) pour un déroulement d'opération, en ce qu'une grandeur de temps est enregistrée dans la zone de temps (48), en ce que la grandeur de temps est abaissée ou relevée d'une valeur préfixée conformément à une base de temps préfixée lorsqu'il est vérifié si le déroulement d'opération est ou non lancé et en ce que le déroulement d'opération est lancé si la grandeur de temps (48) a atteint une valeur préfixée.

6. Procédé suivant la revendication 5, caractérisé en ce qu'une valeur variable, qui varie en fonction de situations, notamment de situations de fonctionnement d'un véhicule automobile, est utilisée en tant que grandeur de temps (48).

7. Dispositif de commande d'un organe de réglage, notamment pour un véhicule automobile, comprenant une unité de calcul (1) qui reçoit des signaux d'entrée et, à partir de ceux-ci, produit des signaux de commande pour l'organe de réglage, dans lequel l'unité de calcul (1) classe des déroulements d'opération dans des priorités préfixées et met en oeuvre les déroulements d'opération en fonction de la priorité, et dans lequel l'unité de calcul (1) associe les déroulements d'opération à des priorités différentes en fonction de situations, notamment de situations de fonctionnement d'un véhicule automobile, caractérisé en ce que l'unité de calcul (1) est reliée à une mémoire en anneau (44) qui est réalisée sous forme de mémoire premier entré-premier sorti, en ce que les mémoires en anneau représentent des mémoires de déroulement (40, 41, 42), en ce que les mémoires de déroulement (40, 41, 42) contiennent des déroulements d'opération et en ce que chaque mémoire de déroulement (40, 41, 42) est associée à l'une parmi plusieurs priorités selon lesquelles les mémoires de déroulement sont mises en oeuvre.
